# EUROPÄISCHE PATENTSCHRIFT

(11) **EP 1 331 059 B1**
(45) Veröffentlichungstag und Bekanntmachung des Hinweises auf die Patenterteilung: **25.11.2009**
(21) Anmeldenummer: 03001644.8
(22) Anmeldetag: 24.01.2003
(51) Int. Cl.: B23K 37/053, B23K 37/04, B23Q 3/06, B23Q 1/52

(54) **Vorrichtung zum Spannen von Behältern und Verfahren zum Spannen, Positionieren und Bearbeiten von Behälter,Tonnen, Kesseln, Rohren und dergleichen unter verwendung einer solchen Vorrichtung**
Fastening device for containers and processes for clamping, positioning and processing containers, barrels, cauldrons, tubes and similar using such a fastening device
Dispositif pour le positionnement de réservoirs et procédés pour la fixation, le positionement et l'usinage de réservoirs, tonneaux, chaudrons, tubes et similaires utilisant un tel dispositif

(30) Priorität: 24.01.2002 DE 10203128
(43) Veröffentlichungstag der Anmeldung: 30.07.2003
(73) Patentinhaber: Hans Funk GmbH Stahl-und Metallbau, 86381 Krumbach (DE)
(72) Erfinder: Funk, Bernd, 86381 Krumbach (DE)
(74) Vertreter: Pfister, Stefan Helmut Ulrich

(56) Entgegenhaltungen:
- EP-A- 0 810 061
- DE-A1- 2 810 382
- US-A- 2 354 794
- US-A- 2 768 597
- US-A- 3 606 033
- US-A- 5 690 323
- US-A- 5 904 347
- PATENT ABSTRACTS OF JAPAN Bd. 2000, Nr. 22, 9. März 2001 (2001-03-09) -& JP 2001 137982 A (TAMOTSU HIROSHI), 22. Mai 2001 (2001-05-22)

## Beschreibung

Die Erfindung betrifft eine Vorrichtung zum Spannen von Behältern, insbesondere wie Tonnen, Kesseln, Rohren und dergleichen gemäß dem Oberbegriff des Anspruchs 1 (siehe, z.B., US 5,690,323).

Die Erfindung betrifft weiter Verfahren zum Spannen, Positionnen und Bearbeiten von Behälten, Tonnen Kesseln, Rohren und dergleichen unter Verwendung einen solchen Vorrichtung, siehe Ansprüche 18 und 20.

Aus dem Stand der Technik im Behälterbau ist es bekannt, vorgefertigte Behältersegmente, Kessel beziehungsweise Rohre größeren Durchmessers für das Anbringen beispielsweise einer Schweißnaht oder das Beschleifen oder das Einbringen von Einbauten wie Böden, Glockenböden etc. auf einer ebenen Fläche auszurichten und dort die Arbeiten durchzuführen. Die Ablage und Fixierung erfolgt dabei entweder auf dem Boden durch Verklotzen mittels Keilen oder durch Ablage auf speziell dafür angefertigten Ablagegestellen beziehungsweise Böcken. Der Nachteil dieser aufwendigen Arbeitsweise liegt darin, daß dann das Behältersegment, Rohr etc. nicht bewegbar für die Bearbeitungsvorgänge ist, was diese Bearbeitungsvorgänge enorm erschwert. Im Rohrleitungsbau hat man dazu beispielsweise spezielle Schweißvorrichtungen entwickelt, die um das Rohr umlaufen. Diese Vorrichtungen sind ebenfalls sehr aufwendig und speziell nur für das umlaufende Schweißen entwickelt worden.

Im Behälter- beziehungsweise Kesselbau ist es zudem erforderlich, vorgefertigte Behältersegmente sehr großen Durchmessers von bis zu über 2 m zusammenzufügen und sehr genau deckungsgleich für den Bearbeitungsvorgang zueinander auszurichten. Dies sind beispielsweise Behältersegmente für Tank- beziehungsweise Kesselwagen oder dergleichen. Es kann sich aber auch um Siloelemente beziehungsweise Kolonnen für chemische Anlagen und so weiter handeln, die ebenfalls aus vorgefertigten Teilsegmenten zusammengefügt werden müssen. Auch hierbei erfolgt eine Arbeitsweise wie zuvor beschrieben. Das heißt, auch die Segmente werden auf einer ebenen Fläche ausgelegt und zum Beispiel zum Verschweißen zweier oder mehrerer Segmente aneinandergelegt. Das Ausrichten erfolgt zum Beispiel durch die Anordnung von Unterlagen, durch Verkeilen beziehungsweise Ausklotzen oder dergleichen.

Aus der Druckschrift US 5,690,323 ist eine Haltevorrichtung für die periphere Halterung eines Werkstückes mit unterschiedlichen äußeren Formen bekannt. Bei dieser Haltevorrichtung ist dabei der Rahmen offen für die Einführung des zu bearbeitenden Werkstückes, beispielsweise zum Einführen des Werkstückes. Zum Spannen von Behältern wird eine äußerst hohe Spannkraft benötigt, die durch die aus der US 5,690,323 bekannte Lösung nicht eingebracht werden kann. Dies ist begründet durch die Ausführung einer nicht geschlossenen Scheibe, in der Spannklauen positioniert sind. Des Weiteren werden die Kräfte durch die aus der US 5,690,323 bekannte Lösung durch eine Reihe von relativ kleinflächigen Druckzylindern eingebracht.

Aufgabe der Erfindung ist es, ausgehend von dem zuvor beschriebenen Stand der Technik, eine verbesserte Vorrichtung zum Spannen und ein verbessertes Verfahren zum Bearbeiten von Behältern, Tonnen, Kesseln, Rohren großen Durchmessers oder dergleichen zur Verfügung zu stellen, die ein einfaches Einspannen und Ausrichten der zu bearbeitenden Bauteile erlauben.

Erfindungsgemäß wird diese Aufgabe durch die in dem unabhängigen Patentanspruch 1 angegebenen Merkmale gelöst. Vorteilhafte Weiterbildungen sind Gegenstand der Unteransprüche.

Erfindungsgemäß wird eine Vorrichtung zum Spannen von Behältern, Tonnen, Kesseln, Rohren und dergleichen zur Verfügung gestellt, die aus mindestens einem Rahmen besteht, in dem mindestens eine in dem Rahmen drehbar angeordnete Schablone vorgesehen ist, die eine Öffnung aufweist, die der Form des zu spannenden Behälters entspricht, wobei die Schablone durch eine miteinander verbundene Doppelscheibe gebildet ist, die zwischen beiden Scheiben eine Spanneinrichtung trägt, die mindestens zweiteilig ausgebildet ist und die Spannflächen aufweist. In diese Vorrichtung kann beispielsweise ein vorgefertigtes Behältersegment eingelegt werden. Durch die deckungsgleiche Form der Schablone ist das Einspannen und Ausrichten wesentlich erleichtert. Nachdem das Behältersegment dann eingespannt ist, läßt sich das in der Schablone befestigte Segment jedoch innerhalb des Rahmens durch die drehbare Anordnung drehen. Dabei wird aufgrund der Einspannung des zu bearbeitenden Behältersegments die Ausrichtung, welche einmal fixiert wurde, nicht mehr verändert. Insgesamt stellt diese Arbeitsweise mittels der zuvor beschriebenen Vorrichtung eine wesentliche Erleichterung während der Bearbeitung derartiger Behältersegmente dar, gleichzeitig wird der Zeitaufwand für das Einspannen und Ausrichten der zu bearbeitenden Bauteile insgesamt verringert. Dies ermöglicht auch eine weitere Automatisierung des Spann- und Ausrichtvorganges. Von Vorteil ist es dabei, wenn die Schablone mindestens zweiteilig ausgebildet ist. Dies erleichtert insbesondere das Einführen und Spannen der Behältersegmente.

Erfindungsgemäß wurde auch gefunden, daß es von Vorteil ist, wenn die Teile der Schablone aufeinander zu- beziehungsweise voneinander wegbewegbar ausgebildet sind. Durch diese Ausführung ist es insbesondere möglich, eine mechanische beziehungsweise hydraulische Spannung der eingelegten Behältersegmente dann vorzunehmen.

Erfindungsgemäß wurde auch gefunden, daß es von Vorteil ist, wenn an der Schablone, zumindest an einer der die Schablone bildenden Doppelscheibe, eine als Auflage ausgebildete Unterstützungskonstruktion für die zu spannenden Behälter beziehungsweise Behältersegmente angeordnet ist. Diese als Auflage ausgebildete Unterstützungskonstruktion erstreckt sich in Längsrichtung der zu spannenden Behälter beziehungsweise Behältersegmente mindestens einseitig an der Spannvorrichtung und dient der Auflage des zu spannenden Behältersegmentes beziehungsweise des zu spannenden Behälters. Diese vorteilhafte Weiterbildung ist insbesondere dafür geeignet, wenn bei kleineren Stückzahlen von zu fertigenden Behältern beziehungsweise Behältersegmenten sich eine zweite Spannvorrichtung beziehungsweise ein Auflagewagen aus Kostengründen beispielsweise nicht anbieten. Dabei ist es selbstverständlich von Vorteil, wenn die Auflage derart ausgebildet ist, daß sie ein formschlüssiges Ablegen der Behälter beziehungsweise Behältersegmente ermöglicht.

Entsprechend einer vorteilhaften Weiterbildung der zuvor beschriebenen Ausführungsform der erfindungsgemäßen Vorrichtung ist es weiterhin vorgesehen, daß diese Auflage als Quadratrohr-Konstruktion mit starrer Befestigung an einer der Scheiben angeordnet ist, wobei es von Vorteil ist, wenn diese Quadratrohr-Konstruktion zur Aussteifung zusätzliche diagonale Verstrebungen besitzt. Es ist weiterhin von Vorteil, wenn die Auflage gleichzeitig höhenverstellbar ist, um ein Ausrichten des Behälters beziehungsweise des Behältersegmentes in der Spannvorrichtung zu erleichtern. Hierzu bietet sich beispielsweise eine Verstelleinrichtung an, die durch ein Spannschloß angegeben ist. Es hat sich auch von Vorteil erwiesen, wenn die Auflage für die Auflage der Behältersegmente beziehungsweise Behälter gleichzeitig als Arbeitsbühne nutzbar ausgebildet ist.

Gemäß einer Weiterbildung der erfindungsgemäßen Lösung ist es vorgesehen, daß die Schablone auf Rollen gelagert ist, die in den Ecken des Rahmens angeordnet sind. Diese Ausführung ermöglicht ein problemloses Drehen der einmal eingespannten Segmente.

Von besonderem Vorteil ist es dabei, wenn zumindest eine der Rollen einen Antrieb zur Erzeugung der Drehbewegung für die Schablone aufweist. Um höhere Genauigkeitsanforderungen erfüllen zu können, ist es erfindungsgemäß bevorzugt, wenn alle Rollen einen Antrieb aufweisen. Vorteilhafterweise sollten dabei die Antriebe für die Rollen synchron gesteuert sein.

Eine Weiterbildung der erfindungsgemäßen Lösung sieht vor, daß in den Ecken des Rahmens Querstreben angeordnet sind, an denen die Rollen für die Drehbewegung und die Antriebe für diese Rollen angeordnet sind.

Ein weiterer Aspekt der Erfindung ist dadurch gekennzeichnet, daß die Spannflächen der Schablone eliptische, kreisrunde, quadratische beziehungsweise rechteckige oder andere Formen aufweisen. Dadurch wird es ermöglicht, jede Art von Behälter, ob eliptisch, kreisrund, quadratisch, kastenförmig etc., in die Vorrichtung einzuspannen. Dazu müssen lediglich die Schablonen gewechselt werden.

Von besonderem Vorteil ist es dabei, wenn die Schablonen als auswechselbare, in den Rahmen einsetzbare Module zur Verfügung stehen. In einer entsprechenden Fertigungsstätte können so bestimmte, immer wiederkehrende Formen von Schablonenmodulen vorgehalten werden, so daß ein problemloses Wechseln der Schablonen bei entsprechendem Bedarf dann möglich ist.

Ein weiterer Aspekt der Erfindung ist dadurch angegeben, daß die zwischen der Doppelscheibe angeordneten Spannflächen hydraulisch, pneumatisch und/oder elektrisch aufeinander zubeziehungsweise voneinander wegbewegbar sind. Dies stellt eine weitere Vereinfachung beziehungsweise Erleichterung des Spannbeziehungsweise Ausrichtvorganges dar und führt zu einer weiteren Zeitersparnis. Es wurde auch gefunden, daß es von Vorteil ist, wenn die Hydraulik- beziehungsweise Pneumatikzylinder beziehungsweise elektrischen Stellantriebe die Bewegung der Spannflächen bewirken und gleichzeitig eine ausreichende Andruckkraft zum Spannen der Behälter zur Verfügung stellen.

Eine Weiterbildung der zuvor beschriebenen Ausführungsformen der Erfindung sieht vor, daß zwei schablonentragende Rahmen vorgesehen sind, wovon mindestens ein Rahmen beweglich ausgebildet ist, derart daß die beiden Rahmen parallel beabstandet zueinander angeordnet und aufeinander zu- beziehungsweise voneinander wegbewegbar sind. Diese Ausführungsform ermöglicht das gleichzeitige Spannen von mindestens zwei Behältersegmenten. Diese werden dann aufeinander zubewegt und gleichzeitig mittels der Schablonen ausgerichtet.

Von Vorteil ist es dabei, wenn der bewegliche Rahmen von Rädern getragen ist. Dabei hat es sich als besonders vorteilhaft herausgestellt, wenn der bewegliche Rahmen schienengebunden geführt ist, vorzugsweise derart, daß die Schienen im rechten Winkel zum Rahmen beziehungsweise zu dem zu spannenden Behälter angeordnet sind und daß gleichzeitig der nichtbewegliche Rahmen ebenfalls im rechten Winkel zu den Schienen angeordnet ist.

Gemäß einer vorteilhaften Weiterbildung der Erfindung ist es vorgesehen, daß beide schablonentragenden Rahmen beweglich ausgebildet sind. Ein weiterer Aspekt der Erfindung ist dadurch angegeben, daß eine Vielzahl schablonentragender Rahmen vorgesehen sind, wodurch gleichzeitig mehrere Segmente aneinanderfügbar sind und gleichzeitig bearbeitet werden können. Eine Weiterbildung der erfindungsgemäßen Vorrichtung ist dadurch gekennzeichnet, daß die beweglichen Rahmen beziehungsweise die sie tragenden Räder einen Fahrantrieb aufweisen. Auch hier ist es möglich, die Arbeiten beim Ausrichten beziehungsweise Positionieren der zu bearbeitenden Behältersegmente etc. zu vereinfachen und insbesondere eine höhere Genauigkeit bei der Positionierung der einzelnen Segmente zueinander zu erreichen.

Es wurde auch gefunden, daß es von Vorteil ist, wenn die Spannstücke innerhalb der Schablone geführt sind. Dies kann beispielsweise dadurch geschehen, daß die Spannstücke mittels Führungsrollen auf Führungsschienen geführt sind, die innerhalb der Schablonen beziehungsweise der Schablonenteile angeordnet sind. Dabei hat es sich von Vorteil erwiesen, wenn die Spannstücke in U-Schienen geführt sind, die der Stärke beziehungsweise Dicke der Spannstücke entsprechen.

Eine vorteilhafte Weiterbildung der erfindungsgemäßen Lösung sieht vor, daß eine Höhen- und Seitenverstellvorrichtung vorgesehen ist, mittels derer die Lage der Schablone innerhalb des Rahmens veränderbar ist. Somit kann das einmal eingespannte Behältersegment beziehungsweise Rohrsegment in seiner Lage gegenüber einem anderen entweder ortsfest auf einer Auflage beziehungsweise in einem zweiten Rahmen positionierten Behältersegment derart verändert werden, daß eine plangleiche beziehungsweise deckungsgleiche Ausrichtung dieser Elemente für den Bearbeitungsprozeß erfolgt.

Entsprechend einer Weiterbildung der erfindungsgemäßen Lösung wurde gefunden, daß es von Vorteil ist, wenn mindestens ein Zuführwagen zum An- beziehungsweise Abtransport der Segmente und/oder der Einbauteile für den Behälter vorgesehen ist. Besonders vorteilhaft ist es dabei, wenn der Zuführwagen Aufbauten trägt, die ein formschlüssiges Ablegen der Segmente und/oder Einbauteile ermöglichen.

Gemäß einer Weiterbildung der erfindungsgemäßen Lösung ist es vorgesehen, daß der oder die Zuführwagen schienengebunden geführt sind, insbesondere derart, daß der oder die Zuführwagen auf den gleichen Schienen, die den Rahmen tragen, angeordnet sind.

Die Aufgabe der Erfindung wird auch gelöst durch ein Verfahren zum Bearbeiten von Behältern, Tonnen, Kesseln, Rohren und dergleichen gemäß dem Anspruch 18. Die Schablone weist dabei Spannmittel auf, die der Form des Behältersegments im Querschnitt entsprechen. Das Behältersegment wird dann in der Schablone zur Bearbeitung ausgerichtet beziehungsweise positioniert und anschließend gespannt. Für die jeweilige Bearbeitung wird dann die günstigste Position durch Drehen der Schablone mit dem eingespannten Behältersegment eingestellt. Diese Arbeitsweise ermöglicht sowohl das Bearbeiten eines einzelnen Behältersegments, wie beispielsweise Schleifen, Schweißen und so weiter. Es ermöglicht auch eine günstigere Gestaltung des Bearbeitungsprozesses beim Montieren und Befestigen von Einbauten in die Behälter, wie beispielsweise Zwischenböden oder Glockenböden. Insbesondere ist es möglich, durch die Vorrichtung eine sehr genaue Positionierung des zu bearbeitenden Behältersegmentes oder dergleichen zu erreichen. Das Verfahren ist **dadurch gekennzeichnet, daß** zum Zusammenfügen von mindestens zwei Behältersegmenten diese in eine Vorrichtung, bestehend aus mindestens zwei schablonentragenden Rahmen, die voneinander beabstandet anordenbar sind, unabhängig voneinander eingelegt und derart positioniert werden, daß sich die Behältersegmente deckungsgleich gegenüberstehen. Danach kann eine Schweißvorrichtung oder eine andere Bearbeitungsvorrichtung an der Verbindungsstelle bzw. Schweißnaht, der Segmente angeordnet werden. Die Verschweißung der beiden Behältersegmente miteinander erfolgt dann durch die Schweißeinrichtung, wobei die Segmente während des Schweißvorganges eine durch die Vorrichtung bewirkte synchrone Drehbewegung ausführen, deren Geschwindigkeit so bemessen ist, daß die Drehbewegung der notwendigen Vorschubbewegung für den Schweißvorgang entspricht.

Eine Weiterbildung des erfindungsgemäßen Verfahrens sieht vor, daß die Schweißvorrichtung zunächst im Inneren der Behältersegmente positioniert wird und die Schweißnaht zunächst im Inneren legt. Dann kann gegebenenfalls ein Ausschleifen der Naht von außen erfolgen. Dies ist vorteilhafterweise mittels einer an der Verbindungsstelle angeordneten Schleifvorrichtung erreichbar, wobei diese ortsfest angebracht sein kann und die Behälterspannvorrichtung die notwendige Drehbewegung zur Verfügung stellt. Anschließend kann dann das Verschweißen von außen in der zuvor beschriebenen Arbeitsweise erfolgen, indem wiederum eine Schweißvorrichtung an der Schweißnaht positioniert wird und die Drehbewegung durch die Behälterspannvorrichtung zur Verfügung gestellt wird.

Die Aufgabe der Erfindung wird auch gelöst durch ein Verfahren zum Spannen, Positionieren und Bearbeiten, wobei eine Vorrichtung gemäß einer der zuvor beschriebenen Ausführungsformen der erfindungsgemäßen Vorrichtung verwendet wird.

Die Erfindung wird nachfolgend anhand von Ausführungsbeispielen und Zeichnungen näher beschrieben.

Es zeigen:
- Fig. 1: eine perspektivische Darstellung einer erfindungsgemäßen Vorrichtung;
- Fig. 2: eine Vorderansicht der erfindungsgemäßen Vorrichtung und
- Fig. 3: eine Schnittdarstellung der Schablone zwischen den beiden Doppelscheiben.

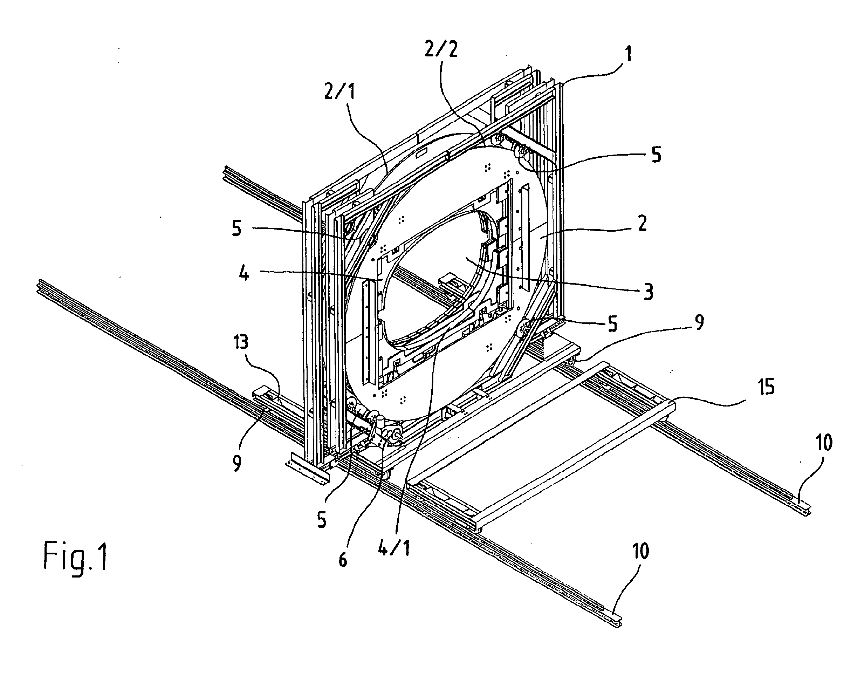

Fig. 1 zeigt eine perspektivische Darstellung einer erfindungsgemäßen Vorrichtung zum Spannen von Behältern. Der Rahmen 1 ist in dieser Darstellung aus U-Trägern gefertigt, wobei in dieser Darstellung zwei Rahmenteile 1 hintereinander beabstandet angeordnet sind. Zwischen den beiden Rahmenteilen 1 ist die Schablone 2 drehbar gelagert angeordnet. Die Drehbarkeit der Schablone 1 wird in dem gewählten Beispiel dadurch erreicht, daß in allen vier Ecken Rollen 5 angeordnet sind. Die Schablone 2 ist dabei kreisrund ausgeführt und weist eine Öffnung 3 auf, die so gewählt ist, daß sie der Form der jeweils zu spannenden beziehungsweise zu bearbeitenden Bauteile wie Behälter, Tonnen, Kessel, Rohre und dergleichen entspricht.

Die Schablone wird in dem gewählten Ausführungsbeispiel gemäß der Fig. 1 durch eine Doppelscheibe 2/1, 2/2 gebildet, wobei die beiden Scheiben 2/1, 2/2 miteinander fest verbunden sind. Zwischen den beiden Scheiben 2/1, 2/2 ist eine Spanneinrichtung 4 angeordnet, die in dem Beispiel gemäß der Fig. 1 zweiteilig ausgebildet ist. Die Spannflächen sind mit dem Bezugszeichen 4/1 bezeichnet, in der dargestellten Ausführungsform ist eine ovale beziehungsweise elliptische Ausführungsform der Öffnung 3 gewählt. Die Form der Spannflächen 4/1 ist dabei korrespondierend dazu ausgeführt. Die Rollen 5 werden von dem Antrieb 6 angetrieben. Damit wird die Drehbewegung der Schablone nach Bedarf bewirkt.

Es ist selbstverständlich möglich, an allen Rollen 5 Antriebe 6 vorzusehen, die vorteilhafterweise dann synchron gesteuert werden müssen. Durch diese Art der Ausbildung erreicht man eine wesentlich höhere Genauigkeit bei der Positionierung der Schablone, so daß diese Ausführungsform dann bevorzugt eingesetzt werden sollte.

In der Fig. 1 ist eine Vorrichtung abgebildet, die auf Schienen 10 geführt ist. Das heißt, es handelt sich dabei um den beweglichen, schablonentragenden Rahmen gemäß der Erfindung. Der Rahmen wird von Rädern 9 getragen und kann vorteilhafterweise durch einen Fahrantrieb 13, der lediglich symbolhaft angedeutet ist, angetrieben werden. Im vorderen Teil der Fig. 1 ist ein Zuführwagen 15 dargestellt. Dieser Zuführwagen 15 kann beispielsweise dazu dienen, die Behältersegmente zu der Vorrichtung zuzuführen beziehungsweise notwendige Einbauteile zu der Vorrichtung mit dann eingespanntem Behältersegment zu transportieren. Zum Spannen eines Behältersegmentes werden die beiden Teile der Spanneinrichtung 4 voneinander wegbewegt, so daß ausreichend Spiel zur Einführung des Behältersegmentes besteht. Befindet sich das Behältersegment in der vorbestimmten Stellung, werden die Teile der Spanneinrichtung 4 aufeinander zubewegt und gespannt. Dies kann beispielsweise mittels hydraulischer, elektrischer oder mechanisch betriebener Antriebe erfolgen.

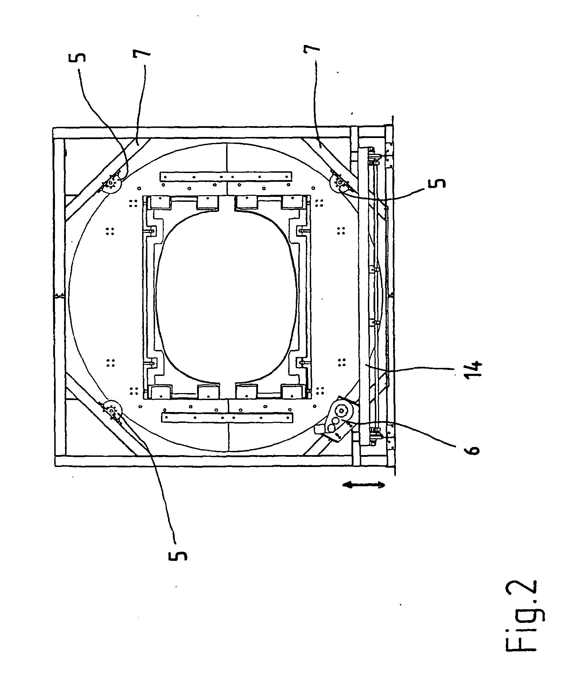

In der so gespannten Stellung kann der gesamte Rahmen 1 mit dem eingespannten Element auf den Schienen 10 verfahren werden, beispielsweise zu einem nichtbeweglich ausgebildeten Rahmen, in dem sich bereits ein eingespanntes Behältersegment befindet. Die beiden Segmente werden dann zueinander positioniert und ausgerichtet. Dies wird anhand der nachfolgend zu beschreibenden Fig. 2 noch näher erläutert. Wenn beide Behältersegmente deckungsgleich zueinander angeordnet sind, kann eine synchrone Drehbewegung, bewirkt durch den Antrieb 6 beziehungsweise die Antriebe 6 der gesamten Schablone mittels der eingespannten Behältersegmente, die Bearbeitung, beispielsweise das Schweißen, erleichtern. Gleiches ist selbstverständlich möglich für andere Bearbeitungsformen, wie beispielsweise Schleifen, Sandstrahlen, Abdrehen von Fasen und so weiter.

Fig. 2 zeigt eine Vorderansicht der in der Fig. 1 dargestellten Vorrichtung. Mit dem Bezugszeichen 5 sind die Rollen für die Drehbewegung der Schablone 2 hier deutlicher dargestellt. Gleiches gilt auch für den Antrieb 6. In den Ecken des Rahmens sind zum Aufnehmen der Rollen 5 Querstreben 7 üblicherweise angeordnet. Mit dem Bezugszeichen 14 soll lediglich angedeutet werden, daß dort oder an anderen geeigneten Stellen eine Höhenund Seitenverstellvorrichtung angeordnet werden kann. Mittels dieser Höhen- und Seitenverstellvorrichtung 14 ist die Lage der Schablone 2 innerhalb des Rahmens 1 veränderbar. Dies wird insbesondere dann benötigt, wenn die Behältersegmente in ihrer Position zu einem anderen Behältersegment bezüglich Höhen- oder Seitenlage verändert werden müssen. Dabei reichen hier lediglich geringe Verstellhöhen beziehungsweise -breiten aus, um ausreichend Spielraum für die Positionierung der Segmente zu erhalten. Beispielsweise kann an der mit dem Bezugszeichen 14 in der Fig. 2 dargestellten Schiene ein Hydraulikstempel oder eine Spindel oder dergleichen angeordnet werden, mittels derer dann die Höhe veränderbar ist. Es wäre jedoch auch denkbar, innerhalb des Rahmens 1 einen höhen- und seitenverschiebbaren weiteren Rahmen anzuordnen, in dem dann die Schablone 2 drehbar gelagert ist.

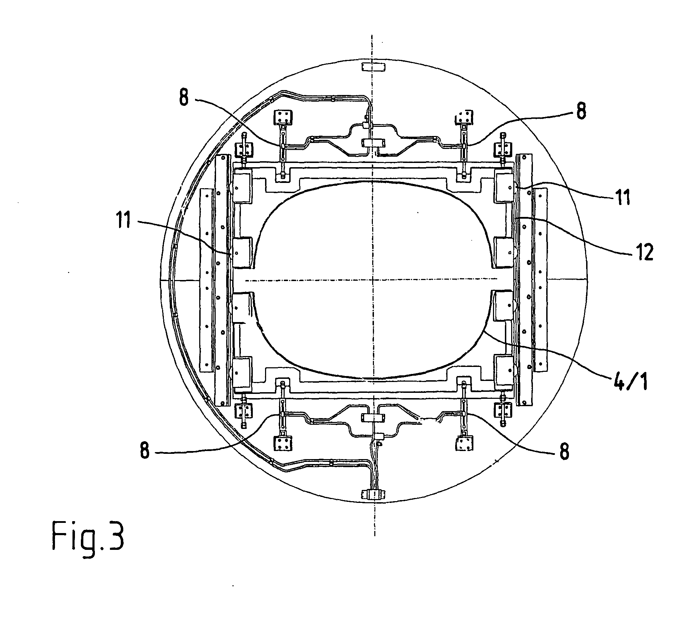

Fig. 3 zeigt eine Schnittdarstellung innerhalb der Schablone 2, und zwar zwischen den beiden Teilen der Doppelscheibe 2/1 und 2/1. Gleiche Bezugszeichen bezeichnen gleiche technische Merkmale, die bereits in den vorgehenden Fig. beschrieben wurden. Auf die erneute Vorstellung wird deshalb verzichtet. In Fig. 3 ist beispielsweise dargestellt, wie die Spannelemente beziehungsweise Teile des Spannelementes 4 aufeinander zu- beziehungsweise voneinander wegbewegbar sind. Dies erfolgt in dieser Darstellung mittels dazu in der Vorrichtung beziehungsweise innerhalb der Schablone 2 angeordneten Hydraulikzylindern, die das Bezugszeichen 8 tragen. Diese Hydraulikzylinder können selbstverständlich als Pneumatikzylinder oder als elektrischer Stellantrieb ausgeführt sein. Die Hydraulik- beziehungsweise Pneumatikzylinder bewirken, daß die zwischen der Doppelscheibe 2/1, 2/2 angeordneten Spannflächen 4/1 hydraulisch, pneumatisch und/oder elektrisch aufeinander zu- beziehungsweise voneinander wegbewegbar sind. Gleichzeitig stellen diese Hydraulikzylinder 8 eine ausreichende Spannkraft zum Spannen eines Behältersegmentes zur Verfügung. Das Bezugszeichen 11 bezeichnet die Führungsrollen, mittels derer die Spannstücke der Spanneinrichtung 4 auf Führungsschienen 12 geführt sind. Die Spannstücke können dabei selbstverständlich auch innerhalb von in der Schablone 2 angeordneten, hier nicht dargestellt U-Schienen geführt werden, die der Stärke beziehungsweise Dicke der Spannstücke 4 entsprechen.

Bevorzugt wird der zu bearbeitende beziehungsweise zu spannende Behälter in der Vorrichtung horizontal orientiert eingesetzt, derart daß entweder die Mantellinie oder die Längsachse des Behälters horizontal orientiert sind.

Entsprechend einer nicht in den Figuren dargestellten Ausführungsform der Erfindung ist es vorgesehen, daß an der Schablone 2 beziehungsweise an einer der Scheiben 2/1, 2/2 eine als Auflage ausgebildete Unterstützungskonstruktion für die Behälter beziehungsweise Behältersegmente angeordnet ist. Diese Unterstützungskonstruktion kann beispielsweise als Quadratrohr-Konstruktion mit starrer Befestigung an der Schablone 2 vorgesehen sein. Dabei ist es weiter von Vorteil, wenn sie im unteren Teil der Scheiben 2/1, 2/2 angeordnet ist, derart daß beispielsweise die Anordnung der Quadratrohr-Konstruktion so ausgeführt ist, daß sie im wesentlichen der Form der Schablone beziehungsweise Spannfläche 4/1 folgt. Es ist weiterhin von Vorteil, wenn dabei auf dieser Quadratrohr-Konstruktion Aufbauten vorgesehen sind, die ein formschlüssiges Ablegen der Behältersegmente ermöglichen. In dieser Ausführungsform kann beispielsweise eine zweite Spannvorrichtung eingespart werden beziehungsweise der Zuführwagen 15 entfallen. Dies bietet sich immer dann an, wenn die Stückzahlen der zu fertigenden Behälter beziehungsweise Behältersegmente die Aufwendungen für zwei Spannvorrichtungen beziehungsweise für eine Spannvorrichtung und einen Zuführwagen nicht rechtfertigen würden. Von besonderem Vorteil ist es dabei, wenn die Auflage gleichzeitig derart ausgebildet ist, daß sie als Arbeitsbühne nutzbar ist. Hierzu sind relativ einfache Aufbauten an der als Auflage ausgebildeten Unterstützungskonstruktion noch vorzusehen, und es kann gleichzeitig dann auch von der der Spannvorrichtung entgegengesetzten Öffnung des Behälters beziehungsweise Behältersegmentes gearbeitet werden. Selbstverständlich ist es dabei von Vorteil, wenn die Auflage selbst höhenverstellbar ist. Hierzu sind wiederum unterschiedlichste technische Realisierungsmöglichkeiten vorgesehen, wie beispielsweise die Anordnung eines oder mehrerer Spannschlösser. Es können allerdings auch entsprechende Stellantriebe, hydraulisch, elektrisch oder pneumatisch, für eine Höhenverstellung der Auflage selbst dienen.

## Patentansprüche

1. Vorrichtung zum Spannen von Behältern, insbesondere wie Tonnen, Kessel, Rohre und dergleichen, bestehend aus mindestens einem Rahmen mit mindestens einer in dem Rahmen (1) drehbar angeordneten Schablone (2), die eine Öffnung (3) aufweist, die der Form des zu spannenden Behälters entspricht, **dadurch gekennzeichnet, dass** die Schablone (2) durch eine miteinander verbundene Doppelscheibe (2/1, 2/2) gebildet ist, die zwischen den beiden Scheiben (2/1, 2/2) eine Spanneinrichtung (4) trägt, die mindestens zweiteilig ausgebildet ist und die Spannflächen (4/1) aufweist.

2. Vorrichtung nach Anspruch 1, **dadurch gekennzeichnet, daß** die Teile der Schablone (2) aufeinander zu- bzw. voneinander wegbewegbar ausgebildet sind.

3. Vorrichtung nach einem der vorhergehenden Ansprüche, **dadurch gekennzeichnet, daß** an der Schablone (2) zumindest an einer die Schablone (2) bildenden Scheiben (2/1, 2/2) eine als Auflage ausgebildete Unterstützungskonstruktion für die zu spannenden Behälter beziehungsweise Behältersegmente angeordnet ist, die sich in Längsrichtung der zu spannenden Behälter beziehungsweise Behältersegmente erstreckt, wobei die Form der Auflage so gewählt ist, daß ein formschlüssiges Ablegen der Behältersegmente ermöglicht ist und/oder die Auflage Aufbauten trägt, die ein formschlüssiges Ablegen der Behältersegmente ermöglicht.

4. Vorrichtung nach Anspruch 3, **dadurch gekennzeichnet, daß** die Auflage als Quadratrohr-Konstruktion mit starrer Befestigung an zumindest einer der Scheiben (2/1, 2/2) angeordnet ist und/oder zusätzliche diagonale Verstrebungen vorgesehen sind und/oder die Auflage höhenverstellbar und/oder gleichzeitig als Arbeitsbühne nutzbar ausgebildet ist.

5. Vorrichtung nach einem der vorhergehenden Ansprüche, **dadurch gekennzeichnet, daß** die Schablone (2) auf Rollen (5) gelagert ist, die in den Ecken des Rahmens (1) angeordnet sind und/oder in den Ecken des Rahmens (1) Querstreben (7) angeordnet sind, an denen die Rollen (5) angeordnet sind.

6. Vorrichtung nach Anspruch 5, **dadurch gekennzeichnet, daß** zumindest eine der Rollen (5) einen Antrieb (6) zur Erzeugung der Drehbewegung für die Schablone (2) aufweist und/oder alle Rollen (5) einen Antrieb (6) aufweisen und/oder die Antriebe (6) für die Rollen (5) synchron gesteuert sind.

7. Vorrichtung nach einem der vorhergehenden Ansprüche, **dadurch gekennzeichnet, daß** die Spannflächen (4/1) der Schablone (2) elliptische, kreisrunde, quadratische beziehungsweise rechteckige oder andere Form aufweisen.

8. Vorrichtung nach einem der vorhergehenden Ansprüche, **dadurch gekennzeichnet, daß** die Schablonen (2) als auswechselbare in den Rahmen (1) einsetzbare Module zur Verfügung stehen.

9. Vorrichtung nach einem der vorhergehenden Ansprüche, **dadurch gekennzeichnet, daß** die zwischen der Doppelscheibe (2/1, 2/2) angeordneten Spannflächen (4/1) hydraulisch, pneumatisch und/oder elektrisch aufeinander zu- beziehungsweise voneinander wegbewegbar sind und/oder die Hydraulik-, Pneumatikzylinder beziehungsweise elektrischen Stellantriebe (8) die Bewegung der Spannflächen (4/1) bewirken und gleichzeitig eine ausreichende Andruckkraft zum Spannen der Behälter zur Verfügung stellen.

10. Vorrichtung nach einem der vorhergehenden Ansprüche, **dadurch gekennzeichnet, daß** zwei schablonentragende Rahmen (1) vorgesehen sind, wovon mindestens ein Rahmen (1) beweglich ausgebildet ist, derart daß die beiden Rahmen (1) parallel beabstandet zueinander angeordnet und aufeinander zu- beziehungsweise voneinander wegbewegbar sind.

11. Vorrichtung nach Anspruch 10 , **dadurch gekennzeichnet, daß** der bewegliche Rahmen (1) von Rädern (9) getragen ist und/oder der bewegliche Rahmen (1) schienengebunden geführt ist, vorzugsweise derart, daß die Schienen (10) im rechten Winkel zum Rahmen (1) beziehungsweise zu dem zu spannenden Behälter angeordnet sind.

12. Vorrichtung nach einem der Ansprüche 10-11, **dadurch gekennzeichnet, daß** beide schablonentragenden Rahmen (1) beweglich ausgebildet sind und/oder eine Vielzahl schablonentragender Rahmen (1) vorgesehen ist.

13. Vorrichtung nach einem Ansprüche 10-12, **dadurch gekennzeichnet, daß** die beweglichen Rahmen (1) beziehungsweise die sie tragenden Räder (9) einen Fahrantrieb (13) aufweisen.

14. Vorrichtung nach einem der vorhergehenden Ansprüche, **dadurch gekennzeichnet, daß** die Spannstücke (4) innerhalb der Schablone (2) geführt sind, vorzugsweise mittels Führungsrollen (11) auf Führungsschienen (12), die innerhalb der Schablone (2) beziehungsweise der Schablonenteile angeordnet sind.

15. Vorrichtung nach Anspruch 14, **dadurch gekennzeichnet, daß** die Spannstücke (4) in U-Schienen, die der Stärke beziehungsweise Dicke der Spannstücke (4) entsprechen, geführt sind.

16. Vorrichtung nach einem der vorhergehenden Ansprüche, **dadurch gekennzeichnet, daß** eine Höhen- und Seitenverstellvorrichtung (14) vorgesehen ist, mittels derer die Lage der Schablone (2) innerhalb des Rahmens (1) veränderbar ist.

17. Vorrichtung nach einem der vorhergehenden Ansprüche, **dadurch gekennzeichnet, daß** mindestens ein Zuführwagen (15) zum An- und Abtransport der Segmente und/oder der Einbauteile für den Behälter vorgesehen ist und/oder der Zuführwagen (15) Aufbauten trägt, die ein formschlüssiges Ablegen der Segmente und/oder Einbauteile ermöglichen und/oder der oder die Zuführwagen (15) schienengebunden geführt sind, insbesondere derart, daß der oder die Zuführwagen (15) auf den gleichen Schienen (10), die den Rahmen (1) tragen, angeordnet sind.

18. Verfahren zum Bearbeiten von Behältern, Tonnen, Kesseln, Rohren und dergleichen, wobei mindestens ein vorgefertigtes beziehungsweise vorgewalztes Behältersegment zu einer Vorrichtung zum Spannen von Behältern, Tonnen, Kesseln, Rohren und dergleichen transportiert und in eine Schablone der Vorrichtung eingelegt wird, welche Spannmittel aufweist, die der Form des Behältersegments im Querschnitt entsprechen, danach das Behältersegment in der Schablone zur Bearbeitung ausgerichtet beziehungsweise positioniert und anschließend gespannt wird, dann das Behältersegment zum Bearbeiten beziehungsweise zur Montage von Einbauten in eine für die jeweilige Bearbeitung günstige Position durch Drehen der Schablone mit dem eingespannten Behältersegment gedreht wird, **dadurch gekennzeichnet, daß** zum Zusammenfügen von mindestens zwei Behältersegmenten diese in eine Vorrichtung nach einem der Ansprüche 10 bis 17, bestehend aus mindestens zwei schablonentragenden Rahmen, die voneinander beabstandet anordenbar sind, unabhängig voneinander eingelegt und derart positioniert werden, daß sich die Behältersegmente deckungsgleich gegenüberstehen, und dann eine Schweißvorrichtung an der Schweißnaht, der Segmente angeordnet wird, die die beiden Behältersegmente miteinander verschweißt, wobei die Segmente während des Schweißvorganges eine durch die Vorrichtung bewirkte synchrone Drehbewegung ausführen.

19. Verfahren nach Anspruch 18, **dadurch gekennzeichnet, daß** die Schweißvorrichtung zunächst die Schweißnaht im Inneren der Behältersegmente legt, dann gegebenenfalls ein Ausschleifen der Naht von außen erfolgt und hernach die Schweißvorrichtung von außen an der Schweißnaht positioniert wird und dann die äußere Schweißnaht legt.

20. Verfahren zum Spannen, Positionieren und Bearbeiten von Behältern, Tonnen, Kesseln, Rohren und dergleichen, **gekennzeichnet durch** die Verwendung einer Vorrichtung nach einem der vorhergehenden Ansprüche 1 bis 17.

## Claims

1. Device for clamping vessels, in particular such as barrels, boilers, pipes and the like, comprising at least one frame with at least one template (2) arranged rotatable in the frame (1) with an opening (3) corresponding with the shape of the vessel to be clamped, **characterised in that** the template (2) is formed by a double disc (2/1, 2/2) connected to each other which carries between the two discs (2/1, 2/2) a clamping device (4) which is designed in at least two pieces and has the clamping surfaces (4/1).

2. Device according to claim 1, **characterised in that** the parts of the template (2) are designed in such a way that they can move towards or away from each other.

3. Device according to one of the preceding claims, **characterised in that** at the template (2) on at least one of the discs (2/1, 2/2) forming the template (2) a support construction designed as support for the vessels to be clamped or the vessel segments is arranged extending in longitudinal direction of the vessels to be clamped or the vessel segments, the shape of the support being chosen in such a way that a positive depositing of the vessel segments is possible, and/or the support carries constructions which make a positive depositing of the vessel segments possible.

4. Device according to claim 3, **characterised in that** the support is arranged as square pipe construction with rigid attachment to at least one of the discs (2/1, 2/2), and/or additional diagonal struts are provided, and/or the support is designed height adjusting, and/or at the same time can be used as working platform.

5. Device according to one of the preceding claims, **characterised in that** the template (2) is on a bearing of rollers (5) arranged in the corners of the frame (1), and/or in the corners of the frame (1) cross struts (7) are arranged on which the rollers (5) are arranged.

6. Device according to claim 5, **characterised in that** at least one of the rollers (5) has a drive (6) for creating the rotating movement for the template (2), and/or all rollers (5) have a drive (6), and/or the drives (6) for the rollers (5) are controlled synchronously.

7. Device according to one of the preceding claims, **characterised in that** the clamping surfaces (4/1) of the template (2) have elliptic, circular, square or rectangular or other shape.

8. Device according to one of the preceding claims, **characterised in that** the templates (2) are provided as exchangeable modules which can be put in the frame (1).

9. Device according to one of the preceding claims, **characterised in that** the clamping surfaces (4/1, 4/2) arranged between the double disc (2/1, 2/2) can be moved towards each or away from one another hydraulically, pneumatically and/or electrically, and/or the hydraulic, pneumatic cylinders or electric actuating drives (8) cause the movement of the clamping surfaces (4/1) and, at the same time, provide sufficient pressing force for clamping the vessels.

10. Device according to one of the preceding claims, **characterised in that** two template-carrying frames (1) are provided, at least one of frames (1) being designed movable in such a way that the two frames (1) are arranged parallel spaced apart from each other and can be moved towards or away from each other.

11. Device according to claim 10, **characterised in that** the movable frame (1) is carried by wheels (9), and/or the movable frame (1) is guided railborne, preferably in such a way that the rails (10) are arranged at a right angle to the frame (1) or the vessel to be clamped.

12. Device according to one of the claims 10 to 11, **characterised in that** both template-carrying frames (1) are designed movable, and/or a number of template-carrying frames (1) is provided.

13. Device according to one of the claims 10 to 12, **characterised in that** the movable frames (1) or the wheels (9) carrying them have a travelling mechanism (13).

14. Device according to one of the preceding claims, **characterised in that** the clamping elements (4) are guided within the template (2), preferably by means of guide rollers (11) on guide rails (12) arranged within the template (2) or the template parts.

15. Device according to claim 14, **characterised in that** the clamping elements (4) are guided in U-shaped rails corresponding with the size or thickness of the clamping elements (4).

16. Device according to one of the preceding claims, **characterised in that** a height and side adjusting device (14) is provided by means of which the position of the template (2) within the frame (1) can be changed.

17. Device according to one of the preceding claims, **characterised in that** at least one feeding carriage (15) is provided for supplying and removing the segments and/or the built-in parts for the vessel, and/or the feeding carriage (15) has constructions which make positive depositing of the segments and/or built-in parts possible, and/or the feeding carriage(s) (15) is/are guided railborne, in particular in such a way that the feeding carriage(s) (15) is/are arranged on the same rails (10) which carry the frame (1).

18. Method for working vessels, barrels, boilers, pipes and the like, where at least on prefabricated or pre-rolled vessel segment is transported to a device for clamping vessels, barrels, boilers, pipes and the like and is inserted in a template of the device which has clamping means corresponding with the shape of the vessel segment in cross section, after that the vessel segment is adjusted or positioned in the template for working and after that is clamped, then the vessel segment is turned for working or mounting things built-in in a favourable position for the respective working by rotating the template with the clamped vessel segment, **characterised in that** for assembling of at least two vessel segments these can be put and positioned independently from each other in a device according to one of the claims 10 to 17, comprising at least two template-carrying frames, which can be arranged spaced apart from each other, can be put in independently from each other and positioned in such a way that the vessel segments face each other congruently, and then a welding device is arranged at the welding bead of the segments which welds the two vessel segments to each other, the segments carrying out a synchronous rotating movement during the welding process caused by the device.

19. Method according to claim 18, **characterised in that** the welding device carries out first of all the welding bead in the interior of the welding segments, then, if necessary, internally grinding of the welding bead is done from the exterior, and, after that, the welding device is positioned from the exterior to the welding bead and then carries out the exterior welding bead.

20. Method for clamping, positioning and working vessels, barrels, boilers, pipes and the like, **characterised by** the use of a device according to one of the preceding claims 1 to 17.

## Revendications

1. Dispositif de serrage de récipients, en particulier de tonneaux, de cuves, de tuyaux et de récipients similaires, comportant au moins un cadre avec au moins un gabarit (2) pouvant pivoter à l'intérieur du cadre (1) et possédant une ouverture (3) correspondant à la forme du récipient à immobiliser, **caractérisé en ce que** le gabarit (2) est constitué d'un double disque (2/1, 2/2) comportant deux disques liés et maintenant entre eux un système de serrage (4) réalisé en au moins deux parties et comportant des surfaces de serrage (4/1).

2. Dispositif selon la revendication 1, **caractérisé en ce que** les parties du gabarit (2) peuvent être déplacées de façon à les rapprocher ou les éloigner l'une de l'autre.

3. Dispositif selon l'une des revendications précédentes, **caractérisé en ce qu'**une construction de support servant comme appui au récipient ou à des parties des récipients à immobiliser s'étend dans leur sens longitudinal et est située sur le gabarit (2) ou au moins sur un des deux disques (2/1, 2/2) constituant le gabarit (2) et **en ce que** la forme de l'appui est choisie de façon à épouser la forme des segments des récipients et/ou **en ce que** l'appui comporte des constructions supplémentaires qui correspondent à la forme des segments des récipients à poser.

4. Dispositif selon la revendication 3, **caractérisé en ce que** l'appui est un tube carré lié de façon rigide à au moins un des disques (2/1, 2/2) et/ou **en ce que** des entretoises diagonales supplémentaires sont prévues et/ou en ce que la position verticale de l'appui peut être modifiée et/ou **en ce que** l'appui peut être utilisé comme plate-forme de travail.

5. Dispositif selon une des revendications précédentes, **caractérisé en ce que** le gabarit (2) est monté sur des rouleaux (5) situés dans les angles du cadre (1) et/ou **en ce que** les angles du cadre (1) comportent des entretoises (7) auxquelles sont fixés les rouleaux (5).

6. Dispositif selon la revendication 5, **caractérisé en ce qu'**au moins un des rouleaux (5) possède une commande (6) pour le mouvement rotatif du gabarit (2) et/ou **en ce que** tous les rouleaux (5) possèdent une commande (6) et/ou **en ce que** les commandes (6) des rouleaux (5) sont contrôlées de façon synchrone.

7. Dispositif selon une des revendications précédentes, **caractérisé en ce que** les faces de serrage (4/1) du gabarit (2) possèdent des formes elliptiques, circulaires, carrées, rectangulaires ou toutes autres.

8. Dispositif selon une des revendications précédentes, **caractérisé en ce que** les gabarits (2) peuvent être mis à disposition et être introduits dans le cadre (1) comme des modules interchangeables.

9. Dispositif selon une des revendications précédentes, **caractérisé en ce que** les faces de serrage (4/1) situées entre les disques (2/1, 2/2) peuvent être déplacées de façon hydraulique, pneumatique et/ou électrique, en les approchant ou en les éloignant l'une de l'autre et/ou **en ce que** les vérins hydrauliques ou pneumatiques ou les moteurs pas à pas électriques (8) provoquent le déplacement des faces de serrage (4/1) et simultanément mettent à disposition une pression d'appui suffisante pour le serrage des récipients.

10. Dispositif selon une des revendications précédentes, **caractérisé en ce que** deux cadres (1) comportant des gabarits (2) sont prévus, dont au moins un est mobile de façon à ce que la distance entre les deux cadres parallèles puisse être diminuée ou augmentée.

11. Dispositif selon la revendication 10, **caractérisé en ce que** le cadre mobile (1) est monté sur des roues (9) et/ou en ce que le cadre mobile (1) est guidé par des rails et de préférence de façon à ce que les rails (10) soient orientés perpendiculairement au cadre (1) ou au récipient à serrer.

12. Dispositif selon une des revendications 10 à 11, **caractérisé en ce que** les deux cadres (1) comportant des gabarits (2) sont mobiles et/ou **en ce que** plusieurs cadres (1) comportant des gabarits sont prévus.

13. Dispositif selon une des revendications 10 à 12, **caractérisé en ce que** les cadres mobiles (1) ou les roues (9) supportant ces cadres possèdent une commande d'avancement (13).

14. Dispositif selon une des revendications précédentes, **caractérisé en ce que** les éléments de serrage (4) sont guidés à l'intérieur du gabarit (2) et ceci, de préférence à l'aide de rouleaux de guidage (11) sur des rails de guidage (12) situés à l'intérieur du gabarit (2) ou de ses parties.

15. Dispositif selon la revendication 14, **caractérisé en ce que** les éléments de serrage (4) sont guidés à l'intérieur de rails en forme de U dont l'ouverture correspond à l'épaisseur ou la hauteur des éléments de serrage (4).

16. Dispositif selon une des revendications précédentes, **caractérisé en ce qu'**un dispositif d'ajustement horizontal et vertical (14) permet de modifier la position du gabarit (2) à l'intérieur du cadre (1).

17. Dispositif selon une des revendications précédentes, **caractérisé en ce qu'**il existe au moins un chariot de livraison (15) pour amener ou sortir les segments et/ou les éléments de construction du récipient et/ou **en ce que** le chariot de livraison (15) comporte des constructions permettant d'épouser la forme des segments interposés et/ou des éléments de construction et/ou **en ce que** le ou les chariot(s) (15) est(sont) guidé(s) par des rails et en particulier **en ce que** le ou les chariot(s) (15) est(sont-) guidé(s) par les mêmes rails qui guident le cadre (1).

18. Procédé d'usinage de récipients, de tonneaux, de cuves, de tuyaux et d'éléments similaires prévoyant de transporter au moins un segment de récipient préfabriqué ou préalablement laminé vers un dispositif de serrage de récipients, de tonneaux, de cuves, de tuyaux et d'éléments similaires, de le déposer dans le gabarit du dispositif, le gabarit possédant des moyens de serrage correspondant à la forme de la section du segment du récipient, d'ajuster et de positionner le segment de récipient dans le gabarit pour l'usinage, de le serrer, puis d'amener le segment de récipient dans une position appropriée pour l'usinage ou le montage d'éléments d'intérieurs à l'aide d'un mouvement rotatif du gabarit entraînant ainsi le segment de récipient serré, **caractérisé en ce que** le jointement d'au moins deux segments de récipient peut être effectué en les positionnant indépendamment dans un dispositif selon une des revendications 10 à 17 et comportant au moins deux cadres possédant des gabarits et dont la distance entre eux peut être modifiée, de façon à ce que les segments soient situés précisément en face l'un de l'autre et **en ce qu'**ensuite un dispositif de soudage est positionné au niveau de la jointure puis soude les deux segments de récipient ensemble pendant que le dispositif effectue un mouvement de rotation synchrone des segments.

19. Procédé selon la revendication 18, **caractérisé en ce que** le dispositif de soudage réalise d'abord une soudure à l'intérieur des segments des récipients puis, le cas échéant effectue un usinage de la jointure par l'extérieur avant que le dispositif de soudage soit positionné à l'extérieur des segments afin de réaliser la soudure extérieure.

20. Procédé de serrage, de positionnement et d'usinage de récipients, de tonneaux, de cuves, de tuyaux et d'éléments similaires, **caractérisé par** l'utilisation d'un dispositif selon une des revendications 1 à 17.
